# EUROPEAN PATENT APPLICATION

(11) **EP 1 498 038 A1**
(43) Date of publication of application: **19.01.2005**
(21) Application number: 03745931.0
(22) Date of filing: 04.04.2003
(51) Int. Cl.: A23L 1/187, A23L 1/06

(54) **GEL FOOD**

(30) Priority: 05.04.2002 JP 2002103501
(71) Applicant: ARKRAY INC., Kyoto-shi, Kyoto 601-8045 (JP)
(72) Inventor: SASAKI, Takao c/o ARKRAY INC., Kyoto-shi, Kyoto 601-8045 (JP); YAMADA, Yasuko c/o ARKRAY INC., Kyoto-shi, Kyoto 601-8045 (JP)
(74) Representative: Jostarndt, Hans-Dieter, Dr. Dipl.-Phys.
(86) International application number: PCT/JP2003/004374
(87) International publication number: WO 2003/084347

(57) **Abstract**

It is possible to provide low calorie pudding, which is similar to the conventional pudding in savor, and can be stored for a long time. Gelling agent, modified starch, indigestible dietary fiber, noncaloric sweetener, and skimmilk powder, which are 0.8-1.6, 1-3, 1-10, 3-9, and 2-4, respectively, in weight ratio to total weight 100, are mixed and stirred into water, and then the mixture is heated so as to become the pudding.

## Description

### Field of the invention

The present invention relates to the manufacturing technique for gel food, in detail, for the low calorie pudding. Additionally, the present invention relates to the technique for reproducing savor and taste of the conventional pudding in case of using low calorie foodstuff instead of eggs having a high caloric value.

### Background Art

Generally, the ingredients of pudding are mainly milk, sugar, and eggs. After the sugar is mixed into the fully beaten egg, the mixture is stirred. Subsequently, the warmed milk is mixed into the mixture, and then the mixture is poured into a mold and heated and cooled, thereby making pudding.

Moreover, there is a well-known domestic powder, which is dissolved in warm water or warmed milk, and then is solidified so as to become pudding easily without the heating by an oven etc. The powder includes the saccharide like sugar, milk powder or gelatin in case of dissolution in warm water, starch, gelling agent, emulsifying agent, perfume, coloring agent, etc. Some powder includes the egg powder. Furthermore, there are many raw ingredients which are similar to the powder and packed by cups so as to be put on sale.

Recently, fads about taste and a rise in healthy-oriented tendency of consumers demand the low calorie pudding which has savor and taste approximately similar to the conventional pudding, whose ingredients are milk, sugar, and eggs. Moreover, in case of decreasing a caloric intake for health, high calorie food including sugar or eggs should be avoided.

It is assumed that piling some factors, such as the habitual ingestion of high calorie food and the stress, cause diabetes. Especially in Japan, diabetes tends to increase in connection with increase of ingestion of animal protein and fat, and decrease of ingestion of dietary fiber.

It is known medically that diabetes is liable to be caused by habitual ingestion of high protein and fat under a deficiency of dietary fiber. Moreover, it is also proved by many clinical examples that a diet, in which high fibrous foods are abundantly ingested and the saccharide, fat, and animal protein are not ingested too much, is remarkably effective against diabetes.

Therefore, an art making the sugarless pudding without sugar is known, and disclosed in the Japanese Patent Laid Open Gazette Sho. 62-115252 for example. In the art, milk protein is solidified, arranged by the gelling agent in properties, and given sweetness by a sugarless sweetener.

Pudding made of sugar or eggs has a high caloric value and contains much animal protein. However, it is difficult to reproduce savor and smooth feeling on the tongue of the conventional pudding in case of using sugar and eggs.

The art disclosed in the Japanese Patent Laid Open Gazette Sho. 62-115252 mainly relates to the technology for dry mixes making a sugarless pudding, so the quality maintenance of the made pudding with time is not considered. In the pudding provided by the dry mix, qualities such as flavor differ with the skill of a cook.

Moreover, in savor, the pudding by the dry mix differs from a pudding including sugar or eggs.

Additionally, foods, which have savor like a smooth and thick pudding by the gelling agent, are liable to dehydrate with time and not adapted to the conservation.

### Disclosure of the Invention

An object of the present invention is to make a pudding without use of a high calorie sweetener and eggs containing much animal protein, give the stability with time to the pudding, and reproduce smooth savor of the conventional pudding.

The inventors found it out that smoothness and thickness in pudding are obtained by adding the processed starch to gel food in which gelling agent is used.

A noncaloric sweetener is mixed as a sweetener.

Conventionally, ingredients having a certain amount of caloric value are necessary to maintain flavor of the pudding. Since sweetness is one of important tastes in pudding, the sweetener is necessary to reproduce the taste of the pudding. However, the generally used sweetener has a high caloric value, so the noncaloric sweetener is mixed as the sweetener, thereby decreasing the caloric value of the whole pudding. Therefore, it is possible to decrease the caloric value of the pudding while maintaining sweetness thereof.

The noncaloric sweeteners like erythritol etc. can be used as the sweeteners, and erythritol is a fermented glucose sweetener which is formed by the fermentation of yeast from glucose. In addition, it is also possible to use sucralose, reduced paratinose, etc.

A low calorie or noncaloric sweetener is used in order to decrease the caloric value of the whole pudding, and adjusted according to the desired flavor of the made pudding. According to the property of the pudding, a low calorie sweetener, a noncaloric sweetener, or a blend of the low calorie sweetener and the noncaloric sweetener, etc. is used as a sweetener.

Next, the pudding is made by using a gelling agent, leading to the solidification of pudding without using eggs.

The gel good serving as a base of pudding is constructed by the gelling agent, so animal protein in the pudding can be decreased. GELUP (registered trademark) PI-931 or PI-R provided by San-Ei Gen F.F.I., Inc. can be used as the gelling agent.

Moreover, it is also possible to utilize the gelling agent showing properties equivalent to those. There are seaweed or red algae, seed of plant, and microbial product, which are sources of gelling agents like agar or carrageenan, pectin, and xanthan gum or gellan gum. It is also possible to use one or a combination of these gelling agents.

The added gelling agent is from 0.8 to 1.6% of the total weight.

Furthermore, smooth savor of the conventional pudding can be reproduced while using the gelling agent. It is difficult that a pudding including the gelling agent instead of eggs, is constructed so as to be stable with time, because the moisture in the pudding during the storage state after making is discharged with time so that the pudding is dehydrated and the savor thereof is changed. Increase of the gelling agent prevents the dehydration of the pudding, but makes the savor thereof hard and different from the conventional pudding.

Then, modified starch is used in order to prevent the dehydration of the pudding. The addition of modified starch prevents the dehydration of the pudding and emphasizes thick and smooth savor, thereby enhancing the stability with time in the pudding and lengthening storage time of the pudding so as to enable long storage thereof.

The added processed starch is 1-3 in weight percent to total weight. Few added processed starch is liable to dehydrate the made pudding during long storage, and much added processed starch hurts smooth savor of the pudding.

FARINEX VA70 WM (brand name) etc. are used as added processed starches, and FARINEX VA70 WM (brand name) is the product of AB STADEX belonging to AVEBE Group.

FARINEX VA70 WM (brand name) is modified starch made from cornstarch, and white powder which is insoluble in water. However, FARINEX VA70 WM (brand name) becomes short and smooth pasty solution by heating with water. Additionally, tapioca starch, processed tapioca starch, decomposition product from starch, etc. can be utilized for the modified starch.

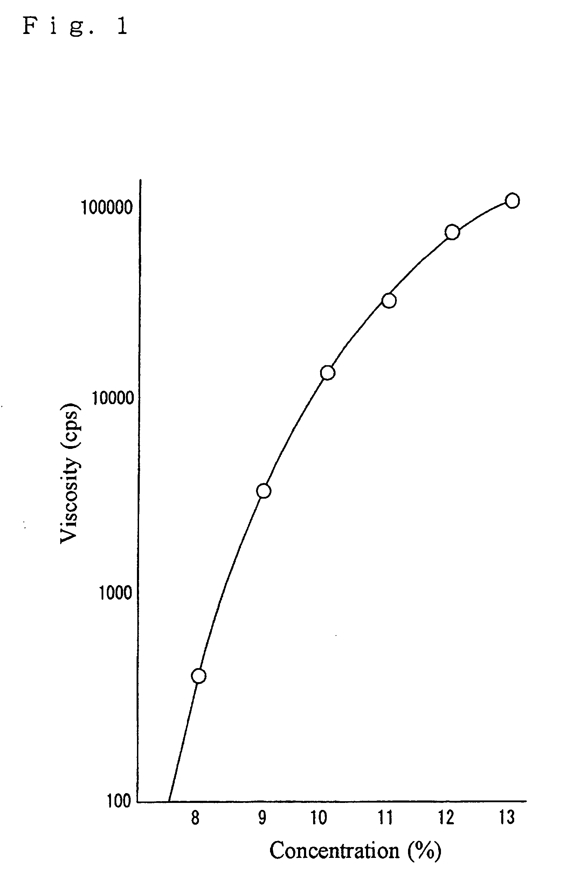

The feature of FARINEX VA70 WM (brand name) is shown in Figs. 1-7.

Relationship between viscosity and starch concentration in pasty solution is shown in Fig. 1, wherein suspension from FARINEX VA70 WM (brand name) is heated up to 90 °C, and then cooled down to 30 °C. Subsequently, viscosity of the pasty solution from the suspension is measured by BH-type Viscometer at a speed of 10 rpm after moisture adjustment.

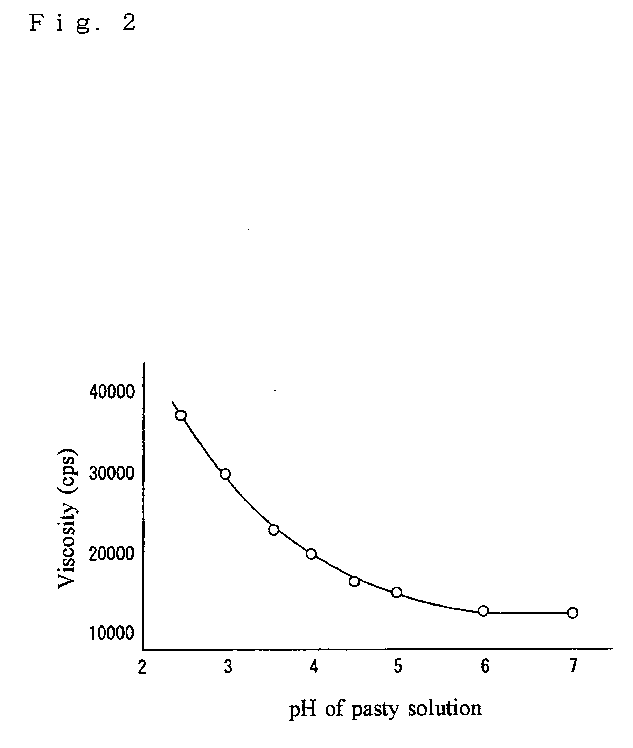

Relationship between viscosity and pH in pasty solution is shown in Fig. 2, wherein citric acid is added to suspension containing 10 % starch, and the suspension is heated up to 90 °C and then cooled down to 30 °C. Subsequently, viscosity and pH of the pasty solution from the suspension are respectively measured by BH-type Viscometer at a speed of 10 rpm and pH-meter after moisture adjustment.

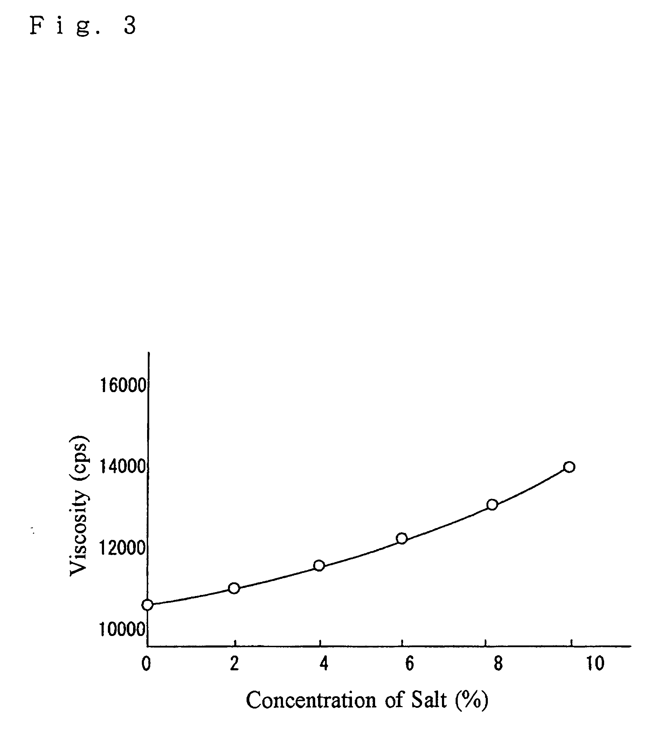

Relationship between viscosity and salt concentration in pasty solution is shown in Fig. 3, wherein salt of predetermined concentration is added to suspension containing 10 % starch, and the suspension is heated up to 90 °C and then cooled down to 30 °C. Subsequently, viscosity of the pasty solution from the suspension is measured by B-type Viscometer at a speed of 10 rpm after moisture adjustment.

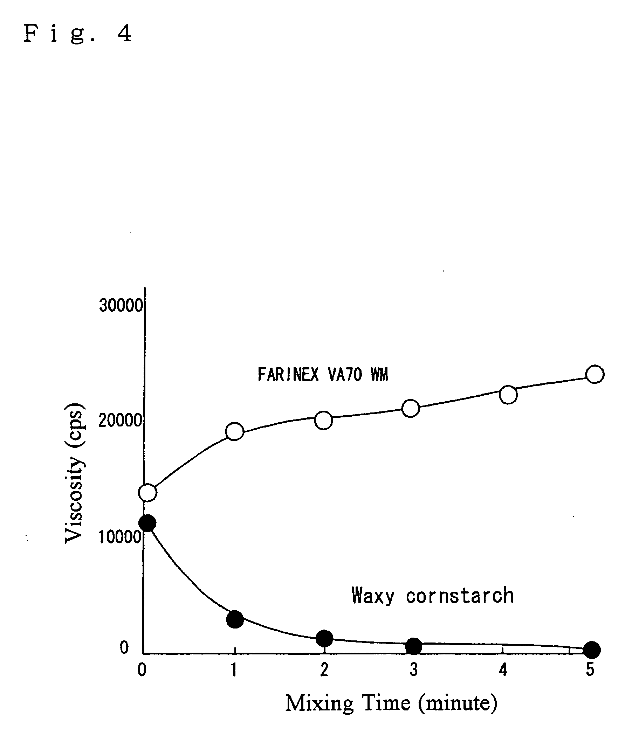

Relationship between viscosity and mixing time of pasty solution is shown in Fig. 4, wherein the pasty solution containing 10 % starch heated up to 90 is cooled down to 30 °C and then mixed by a homomixer at a speed of 5000 rpm. Subsequently, viscosity of the pasty solution is measured at a speed of 10 rpm at 30 °C.

Freeze thaw stability is shown in table 1, wherein each additive is added to suspension containing 10 % starch in the total weight of 200 g, and the suspension is heated up to 90 °C and then frozen all night at minus 20 °C. Subsequently, a state of dehydration in the frozen pasty solution from the suspension is investigated after thaw at a room temperature.

**Table 1**

| Freeze thaw stability | | | | | | | | |
|---|---|---|---|---|---|---|---|---|
| Suspention containing 10 % starch in the total weight of 200 g is heated up to 90°C as follow, and then frozen all night at minus 20 °C. Subsequently, the state of dehydration in the frozen pasty solution from the suspension is investigated after thaw at a room temperature. | | | | | | | | |
| Additive (g) | | | Freeze thaw number | | | | | |
| sugar | salt | citric acid | 1 | 2 | 3 | 4 | 5 | 6 |
| | | | dehydration | | | | | |
| 60 | | | ○ | ○ | ○ | ○ | ○ | dehydration |
| | 20 | | ○ | ○ | ○ | ○ | ○ | dehydration |
| | | PH 3.5 | ○ | dehydration | | | | |
| 60 | 0.4 | PH 3.5 | ○ | ○ | ○ | ○ | ○ | ○ |

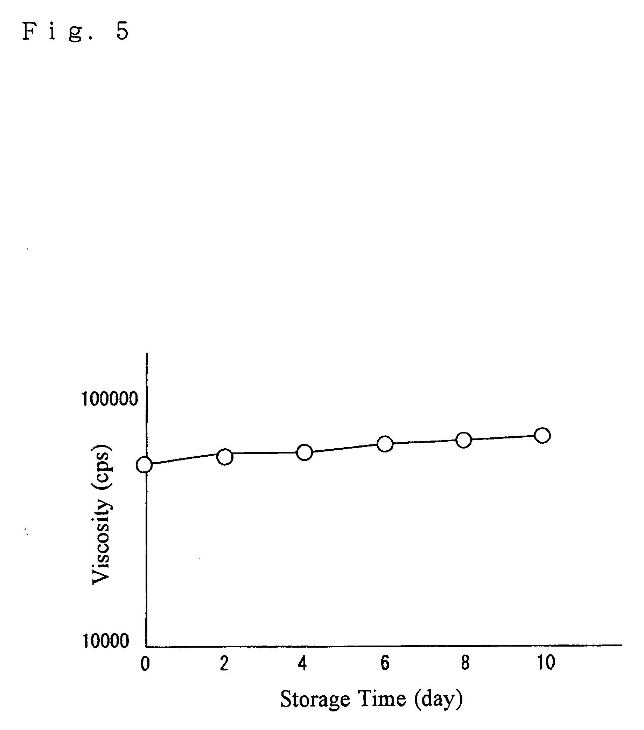

Refrigeration stability is shown in Fig. 5.

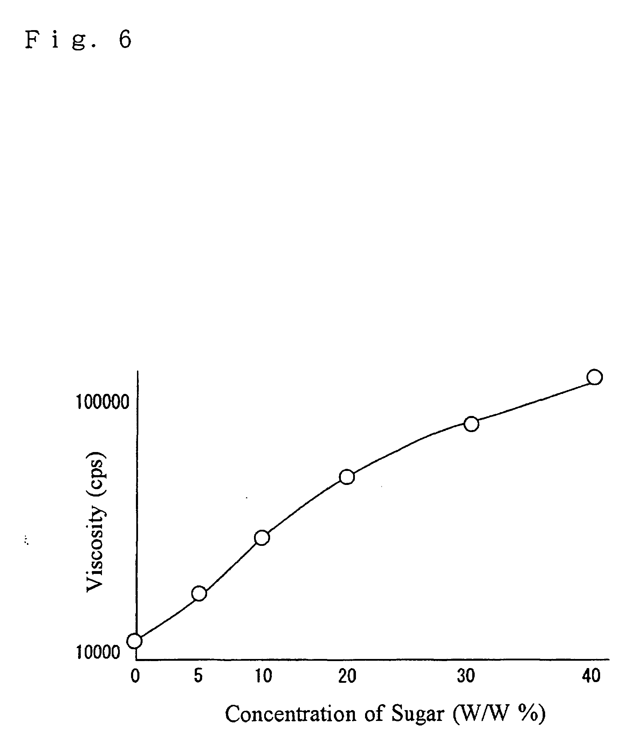

Relationship between viscosity and sugar concentration in pasty solution is shown in Fig. 6, wherein the pasty solution is containing 10 % starch, and weight percentage to the total weight is used for the sugar concentration.

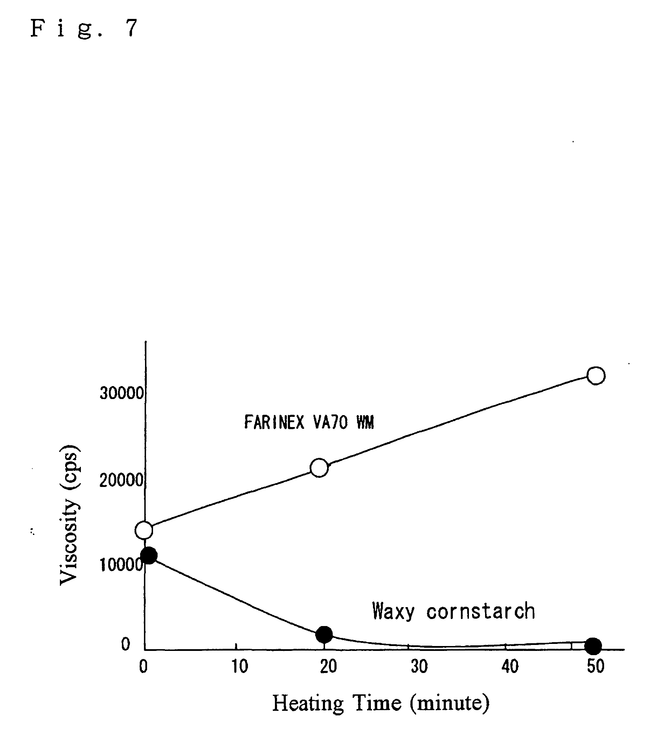

Influence of heating is shown in Fig. 7, wherein pasty solution containing 10 % starch, which has been prepared by heating up to 90 °C, is heated up to about 120 °C at a pressure of 1.2 kg/cm2 during predetermined time, and then cooled down to 30 °C. Subsequently, viscosity of the pasty solution is measured at a speed of 10 rpm.

The feature of FARINEX VA70 WM (brand name) is as above, and alternative processed starches having the same feature as FARINEX VA70 WM (brand name) may be used.

Moreover, water-soluble dietary fiber is added to the pudding.

As mentioned above, it is known that a diet, wherein high fibrous foods are abundantly ingested and the saccharide, fat, and animal protein are not ingested too much, makes it hard to cause illness like diabetes. The pudding of the present invention is a balanced diet so as to make it hard to cause diabetes and so on, because a decrease in saccharide, fat, and animal protein, and an addition of dietary fiber prevent excessive caloric intake. Moreover, water-soluble dietary fiber of various dietary fibers acts the control of insulin secretion effectively.

Furthermore, milk, skimmilk powder, and skim sweetened condensed milk are used.

It is easy to give a flavor to the pudding by adding milk, so the pudding can have a natural flavor. Dairy products like soy milk can be also added instead of milk. Furthermore, milk, soy milk, etc. can hide the characteristic taste of indigestible dextrin.

Skimmilk powder and skim sweetened condensed milk are used in order to emphasize flavor of the pudding. It is possible to keep the caloric value of the pudding low as the whole while emphasizing flavor of the pudding by using skimmilk powder and skim sweetened condensed milk from which high calorie oils and fats are removed.

Naturally, calcium or protein contained in milk, skimmilk powder, and skim sweetened condensed milk can be also used as reactant for gelation.

Product constructed by gelling agent and modified starch, which are 0.8-1.6 and 1-3, respectively, in weight ratio, is used as a gel base of the pudding.

In this case, the pudding has no use for eggs so as to decrease animal protein and keep low caloric value.

Moreover, the pudding having total weight 100 may additionally include indigestible dextrin and milk or soy milk, which are 6-10 and 8-12, respectively, in weight ratio, so as to reduce caloric intake while keeping its flavor.

Product constructed by gelling agent, modified starch, indigestible dietary fiber, noncaloric sweetener, and skimmilk powder, which are 0.8-1.6, 1-3, 1-10, 3-9, and 2-4, respectively, in weight ratio to total weight 100 of the pudding, is used as a gel base of the pudding. In this case, it is possible to provide low calorie gel foods having thick and smooth savor of the pudding.

The modified starch is desirably 1.5-2.5 in weight ratio to total weight 100 so as to give more desirable savor to the pudding.

Moreover, various gel goods having savor of the pudding can be provided by adding perfume and so on to the above mentioned gel food.

### Brief Description of the Drawings

Fig. 1 is a graph showing relationship between viscosity and starch concentration in pasty solution.
Fig. 2 is a graph showing relationship between viscosity and pH in pasty solution.
Fig. 3 is a graph showing relationship between viscosity and salt concentration in pasty solution.
Fig. 4 is a graph showing relationship between viscosity and mixing time of pasty solution.
Fig. 5 is a graph showing refrigeration stability.
Fig. 6 is a graph showing relationship between viscosity and sugar concentration in pasty solution.
Fig. 7 is a graph showing influence of heating in pasty solution.

### Best Mode for Carrying out the Invention

Next, description will be given of an embodiment of low calorie pudding.

Composition in an embodiment of low calorie pudding is shown in table 2.

**Table 2**

| Raw ingredient | Blend rate | Calories by Ingredient (Kcal / 100g) |
|---|---|---|
| Milk | 10.00 | 5.90 |
| Indigestible dextrin | 8.0 | 0.00 |
| Noncaloric sweetener | 6.00 | 0.00 |
| Skimmilk powder | 3.00 | 10.77 |
| Skim sweetened condensed milk | 2.00 | 5.36 |
| Modified starch | 2.00 | 6.80 |
| Gelling agent | 1.10 | 2.82 |
| Others | 0.31 | 1.44 |
| Water | 67.59 | |
| Total | 100.00 | 33.08 |

After milk and skim sweetened condensed milk are mixed into water, the mixture is stirred. Subsequently, skimmilk powder, indigestible dextrin, noncaloric sweetener, modified starch, and gelling agent are stirred into the mixture, and then the mixture is stirred at about 80 °C for 10 minutes so as to be dissolved.

Afterward, perfume etc. is added to the mixture, and the total weight thereof is adjusted by water. The mixture filled into a vessel is sterilized by retort sterilization carried out at about 120 °C for 20 minutes, and then cooled.

Puddings having custard flavor or powdered-green-tea flavor can be provided by adding perfume etc.

In another 6 months for storage, the pudding made as above is not dehydrated, maintains good property, and has savor similar to the conventional pudding including eggs and sugar.

The very smooth pudding can be provided by using FARINEX VA70 WM (brand name) for the above mentioned embodiment as modified starch.

Compounding ratios of raw ingredients in an embodiment of low calorie pudding are shown in table 3, soy milk being used for the low calorie pudding.

**Table 3**

| Raw ingredient | Blend rate | Calories by Ingredient (Kcal/100g) |
|---|---|---|
| Soy milk | 20.00 | 9.20 |
| Indigestible dextrin | 8.0 | 0.00 |
| Noncaloric sweetener | 6.00 | 0.00 |
| Skimmilk powder | 3.00 | 10.77 |
| Fresh cream (47%) | 2.00 | 8.76 |
| Modified starch | 2.00 | 6.80 |
| Gelling agent | 1.10 | 2.82 |
| Calcium lactate and others | 0.26 | 0.45 |
| Water | 57.64 | |
| Total | 100.00 | 38.79 |

After raw ingredients in Table 3 are mixed into water, the mixture is stirred at about 80 °C for 10 minutes so as to be dissolved. Subsequently, perfume etc. is added to the mixture, and the total weight thereof is adjusted by water. The mixture filled into a vessel is sterilized by retort sterilization carried out at about 120 °C for 20 minutes, and then cooled. In this way, it is possible to make the low calorie pudding wherein soy milk is used.

Various ingredients such as fruit, flesh, fruit juice, extract, flavoring ingredient can be also added to gel food according to the present invention in order to increase palatability thereof so as to make the gel food more pleasant as the case may be.

As the fruit, flesh, and fruit juice, it is possible to use apple, strawberry, peach, orange, banana, kiwi, aloe, grape, lemon, pineapple, melon, aloe, blueberry, grapefruit, mango, coconut, cherry, muscat, raspberry, etc.

In addition, as the solid, powder, paste, and extract, it is possible to use cocoa, coffee, powdered green tea, tea, liquor, almond powder, bean jam, coconut, adzuki bean, chestnut, cheese, yogurt, herbs, and nuts, etc.

As the flavoring ingredient, it is possible to use flavorful extract, pure fruit extract, imitation fruit extract, chocolate flavoring ingredient, ester, volatile oil, vanilla, natural or artificial perfume which can be obtained commercially, and at least one of them can be added.

Vitamin, mineral, and various ingredients having functional components can be added to gel food according to the present invention in order to give higher healthy feeling to the gel food as the case may be. The vitamins are vitamin C, A, B1, etc.; the minerals are calcium, iron, kalium, magnesium, etc.; the ingredients having functional component are collagen, banaba, salacia, mulberry leaf, catechin, etc., and at least one of them can be added.

### Industrial Applicability of the Invention

As mentioned above, it is possible to provide low calorie pudding, which has sufficient flavor of the conventional pudding, and is suitable for long storage. Additionally, the low calorie pudding can be provided as retort-packed food. Thereby, it is possible to decrease the stress of calorific value on people eating puddings.

The addition of the indigestible dextrin decreases caloric-intake efficiency so as to decrease calorie taken by eating pudding, so people being anxious about calorific value can also eat the pudding easily.

## Claims

1. A gel food, comprising:
gelling agent; and
modified starch,
wherein the gelling agent and the modified starch are 0.8-1.6 and 1-3, respectively, in weight ratio to total weight 100 of the gel food.

2. A gel food as set forth in claim 1, further comprising indigestible dextrin, wherein the indigestible dextrin is 6-10 in weight ratio to total weight 100 of the gel food.

3. A gel food as set forth in claim 1 or 2, further comprising milk or soy milk, wherein the milk or soy milk is 5-30 in weight ratio to total weight 100 of the gel food.

4. A gel food as set forth in claim 1, 2, or 3, further comprising noncaloric or low calorie sweetener, wherein the noncaloric sweetener or low calorie sweetener is 3-9 in weight ratio to total weight 100 of the gel food.

5. A gel food, comprising:
gelling agent; and
modified starch,
wherein the gelling agent and the modified starch are contained in compounding ratios so as to provide dehydration of the gel food during a storage state.

6. A gel food as set forth in claim 5, wherein the gelling agent and the modified starch are contained in compounding ratios so as to give savor of pudding to the gel food.
